# EUROPEAN PATENT APPLICATION

(11) **EP 1 460 408 A1**
(43) Date of publication of application: **22.09.2004**
(21) Application number: 04100783.2
(22) Date of filing: 27.02.2004
(51) Int. Cl.: G01M 3/28, G01M 3/38, F16L 11/08

(54) **Leak detection system and method for offshore hose lines**

(30) Priority: 11.03.2003 US 387201
(71) Applicant: THE GOODYEAR TIRE & RUBBER COMPANY, Akron, Ohio 44316-0001 (US)
(72) Inventor: Spaolonzi, Mauricio Pinto, 02309-100, Sao Paulo SP (BR); Pereira de Lucena, Waldir, 03021-000, Sao Paulo SP (BR); Sanches, Luis Roberto Flores, Sao Paulo (BR)
(74) Representative: Kutsch, Bernd

(57) **Abstract**

An oil leak detection device and system (10) is installed in a double carcass hose (16, 18) in communication with a collection space (94) between inner (86) and outer carcass layers (88) of the hose (16, 18). The oil leak detection device (10) communicates information relating to the presence or absence of fluid within the collection space (94) to a remote location (14). The leak detection device (10) is positioned within a chamber (74) within a hose nipple (56). The chamber (74) communicates with the collection space (94) and collects oil leaking through the inner carcass (86) into the collection space (94) between the inner and outer carcass layers (86, 88). The oil leak detection device (10) is preferably an electro-optic sensor (34) having optical detection means for detecting the presence and absence of fluid in the collection chamber (74), and communication means for transmitting information regarding the detected fluid status to a remote display unit (14). The display unit (14) may include visual and/or audible indicia identifying the status and location of a plurality of sensors (34) and thereby identify the location of a specific leak.

## Description

### Field of the Invention

The invention relates generally to offshore pumping stations and, more specifically, to hose leak detection systems deployed within the context of such pumping stations.

### Background of the Invention

In offshore pumping operations, there is a systematic risk of oil leakage to the sea from damage to single carcass submarine or floating oil suction and discharge hoses. As used herein, a "single carcass hose" is a hose construction comprising only one carcass layer. Leakage from a single carcass hose may from a precipitous hose failure or a failure that materializes over time. Hose failure may result from overpressure of the system, a puncture from outside, sudden tensile break of the hose body, defects in the manufacture, construction or design of the hose, etc. In a single carcass hose construction, hose failure results in immediate oil leakage to the environment surrounding the hose. Such leakage is highly undesirable for obvious environmental and economic reasons.

Because of the risk of failure inherent in single carcass hose construction, a "double carcass" hose construction has been proposed. Such a construction utilizes an outer hose carcass confining an inner hose carcass as an added safeguard. The outer hose functions to hold any oil or fluid that leaks through the inner hose carcass for a certain designed period of time. In a typical double carcass construction, a hose includes a main pressure cord or carcass layer as a primary confinement and an outer, or auxiliary, pressure cord layer formed so as to sheathe the inner carcass. A buffering space is defined between the carcass layers to retain fluid that leaks from the inner carcass. In use, it is common to connect hoses end-to-end to form a hose line for transporting oil or other fluid under pressure. US-A- 5,244, 016 discloses a hose representative of the state of the art double carcass construction.

A double carcass hose is generally produced and utilized in two different types: submarine or floating configurations, depending on the type of application and offshore oil pumping system. Submarine applications require that a hose extend in submerged fashion between two points whereas a floating application requires that the hose extend across the water surface. In either application, leakage from the hose results in the aforementioned undesirable consequences.

In order to minimize the damage resulting from an undetected leak, various leak detection systems have been proposed and adopted. Such systems generally are based in theory on observation or mechanical manipulation of a hose to ascertain the existence and location of a leak. Mechanical manipulation may take the form of twisting a hose along its axis; scoring of the outer hose carcass; or a pin located at the hose nipple that indicates by its position whether a leak is present. Mechanical systems, however, require visual inspection by professional scuba divers. Such visual inspections can only be conducted, as a practical matter, during daylight because visibility is extremely limited during night hours. Limiting pumping operation to daylight hours, as is commonly done in pumping operations, results in production inefficiency. Inclement weather conditions, moreover, may periodically make the utilization of divers to inspect hose lines impossibly dangerous. The delays associated with waiting for weather to clear further adds operational cost. In addition, the labor cost associated with deployment of professional divers to inspect hose lines is considerable. Accordingly, mechanical systems requiring visual inspection, while better than no leak detection system, represent a less than ideal solution to the industry's need for a reliable and cost effective hose leak detection system.

### Summary of the Invention

The present invention obviates the deficiencies with state of the art hose leak detection by providing a system that remotely senses the existence and location of a leak without the need for a visual inspection. An oil leak detection device and system is installed in the hose in communication with a collection space between inner and outer carcass layers of the hose. The oil leak detection device communicates information relating to the presence or absence of fluid within the collection space to a remote location.

According to a further embodiment of the invention, the leak detection device is positioned within a collection chamber that is incorporated within the hose nipple. The chamber communicates with the collection space and collects oil leaking through the inner carcass into the collection space between the inner and outer carcass layers. Preferably, such a collection chamber is provided in each of the hose nipple end portions in fluid communication with a respective portion of the collection space, each fluid detection sensor extending at least partially into a respective collection chamber.

According to a further embodiment of the invention, the oil leak detection device is an electronic sensor having detection means for detecting the presence and absence of fluid in the collection chamber, and communication means for transmitting information regarding the fluid status within the collection chamber to a remote display unit. The display may include visual indicia identifying the status and location of a plurality of sensor devices in a hose line system.

According to another embodiment of the invention the detection means may utilize optical means for detecting the presence and absence of fluid in the collection chamber.

According to a further embodiment of the invention, detection means may be located at each of two opposite ends of a hose line segment in a hose system comprising hose line segments coupled end-to-end.

Yet a further aspect of the invention is to provide a method for leak detection in a double carcass hose line system comprising the steps: positioning at least one detection means in communication with a fluid collection space between the inner and outer carcass of a hose line segment, the detection means including means for detecting the presence and absence of fluid in the collection space; communicating information regarding the fluid status of the collection space to a remote location; and indicating at the remote location the fluid status within the collection space.

These and other embodiments and aspects of the invention, which will be apparent to those skilled in the art, are achieved by a preferred embodiment that is described in detail below and illustrated in the accompanying drawings.

### Brief Description of the Drawings

The invention will be described by way of example and with reference to the accompanying drawings in which:
FIG. 1 is a schematic representation of one application of the subject invention in an offshore oil pumping station.
FIG. 2 is a right front perspective view of a fluid detection sensor pursuant to the invention.
FIG. 3 is a side elevation view of the fluid detection sensor with portions in section for the purpose of illustration.
FIG. 4 is a plan view of a representative display unit configured pursuant to the invention.
FIG. 5 is a side elevation view partially in section of a hose nipple having a fluid detection sensor incorporated therein pursuant to the invention.

### Detailed Description of the Preferred Embodiments

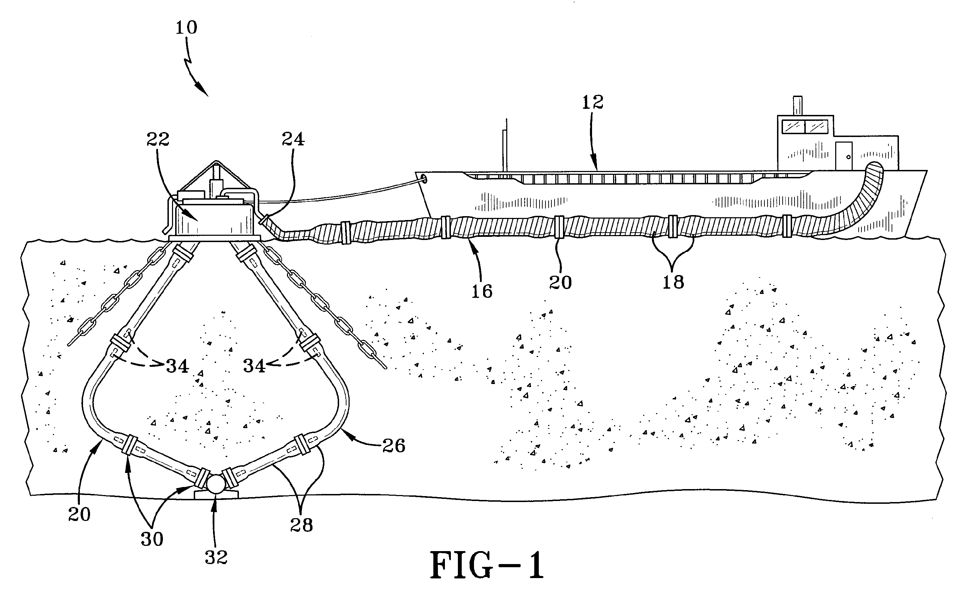

Referring initially to FIG. 1, an offshore oil drilling application is depicted by way of example incorporating a double carcass hose with built-in electronic remote oil leak detection system 10 configured pursuant to the subject invention. The offshore oil drilling station of FIG. 1 is but one of many applications for the invention and the invention is not intended to be limited thereto. Any application in which a double carcass hose is utilized for the transportation of a fluid can utilize the subject leak detection system and the teachings herein set forth.

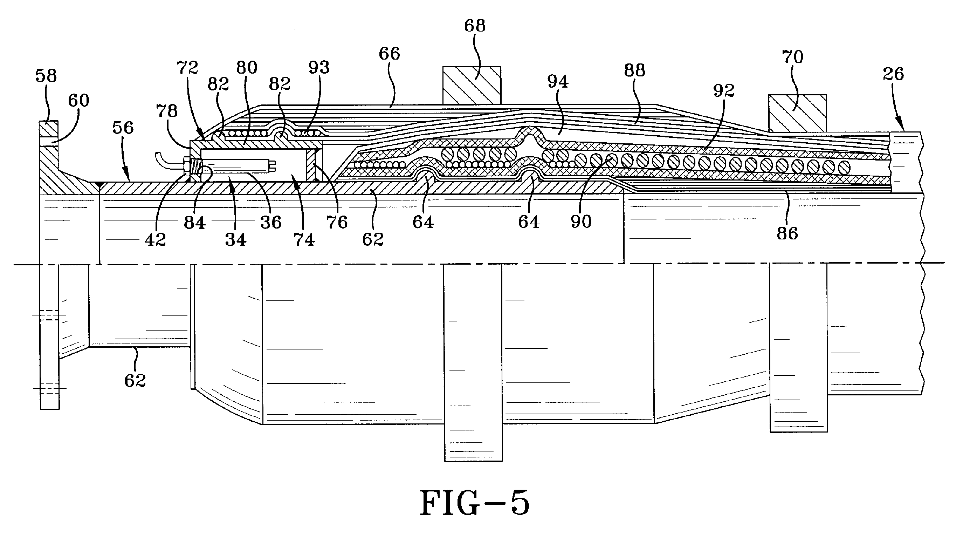

The representative field application of FIG. 1 is schematically represented by a tanker or platform 12 on which a control unit or panel 14 (FIG. 4) is located. Extending from the tanker 12 is a network of floating hose lines 16 comprising end to end connected hose segments 18 joined together by a coupling 20. The floating lines 16 extend to a buoy 22 and connect thereto by a coupling 24. Submarine hose lines 26 depend from buoy 22 and comprise hose segments 28 connected end to end by couplings 30. Submarine hose lines 26 terminate at a pump station 32. Oil is pumped from station 32 upward through hose lines 26 to the floating lines 16 and therein to the tanker 12. Pursuant to the invention, as explained in detail below, leak detection sensors 34 are disposed within the hose lines 16 and 26 to detect fluid leakage and prevent the fluid from escaping into the sea. Preferably, although not necessarily, each hose segment is provided with two sensors 34. More or fewer sensors per hose line or hose line segment may be deployed if desired.

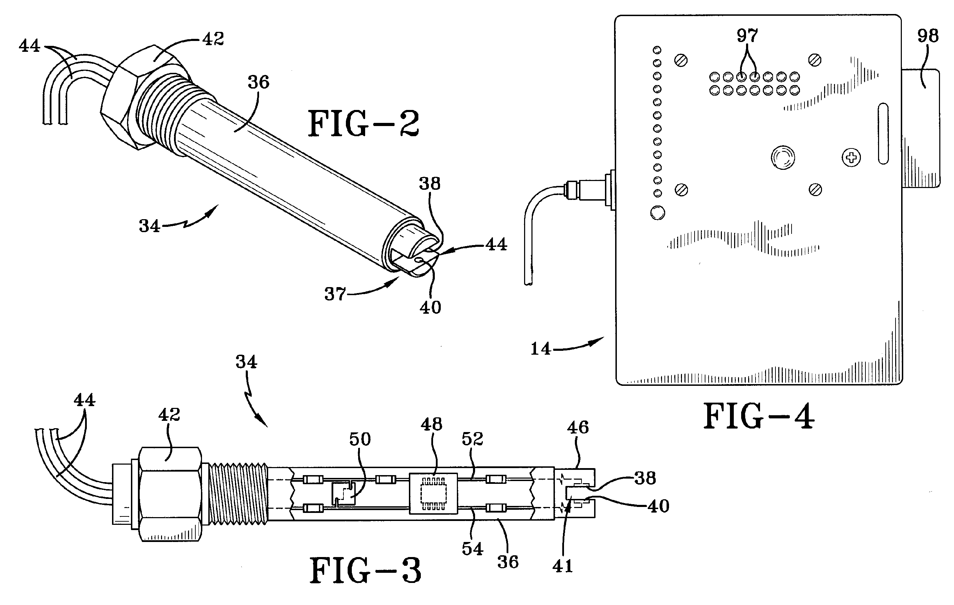

A representative electro-optic embodiment of a fluid detection sensor 34 is shown in FIGS. 2 and 3. While the embodiment illustrated is a preferred form for the sensor 34, the subject invention is not intended to be so limited. Other forms of sensors and associated circuitry for detecting the presence of fluid and generating a warning signal in the event of leak detection, that will be apparent to those skilled in the art, may be deployed if desired. By way of example, without representing an exhaustive list, liquid detectors based upon chemical, thermal, mechanical, or other physical properties and principles may be substituted to detect leakage fluid. The form of detector 34 shown FIGS. 2 and 3 represents one embodiment for performing the desired fluid detection function.

With continued reference to FIGS. 2 and 3, the detector 34 is a substantially cylindrical body 36 formed of a hard material such as steel. The body 36 extends forward to a sensor tip 37, comprising a spaced apart coupled electro-optic transmitter and receiver devices 38, 40. The devices 38, 40 are custom made to fit this specific application, but use common use commercially available technology. The transmitter 38 and receiver 40 are separated by a gap 41. At the rearward end of the body 36 is a threaded bolt coupling 42. Electrical leads 44 are routed into the body 36 from the rearward end. A protective covering 46 surrounds the forward tip 37 of the body 36 and is formed of a suitable material such as thermoset or thermoplastic resin. A custom made microprocessor 48 is enclosed within body 36, of a type using commercially available technology. Output terminals of processor 48 are connected in series to the transmitter 38 and receiver 40 by leads 52, 54, respectively. A battery 50 is further provided to power the microprocessor 48 and electro-optic devices 38, 40.

Sensor 34, it will be appreciated, functions to detect the presence of fluid at the tip end 37. The electronic circuitry of sensor 34 is essentially an open circuit switch. In the absence of fluid, an optical beam is generated by transmitter 38, traverses gap 41, and is received by receiver 40. When the beam is interrupted by, in the subject application, the presence of oil between devices 38, 40, a short circuit is caused and the electronic circuit (switch) closes. Upon closing, an electronic signal is sent via leads 44 to the remote control unit depicted in FIG. 4, located in a control room of the oil tanker or the oil platform. Alternatively, by electronic means commonly known to the industry, the electronic signal may be conveyed to the control unit by wireless transmission by the incorporation of an antenna and transmitter within the sensor 34. While the sensor 34 is shown to switch to a closed position by the interruption of an optical beam, it will be readily appreciated that alternative means may be designed that, responsive to the detection of fluid, cause an electronic signal to be transmitted to a remote control unit. The signal may be encoded to include an identification of the specific sensor 34 sending the signal in order to pinpoint the location of the leak from the location of the sensor 34.

Incorporation of the sensor 34 into a double carcass hose pursuant to the invention is illustrated in FIG. 5. With reference thereto, the end or nipple portion 56 of a hose 26 includes flanges 58 for connecting the hose 26 to an adjacent hose, end-to-end. The inner diameter and outer diameter of the hose varies according to the application. The flange 58 includes assembly apertures 60 extending therethrough. Projecting rearward from flange 58 is a cylindrical portion 62 having anchoring rings 64 projecting from an outer circumference thereof. A cylindrical outer body 66 is provided having a pair of circumferential spaced apart assembly flanges 68, 70 projecting outward from an outer circumference thereof. Body 66 and outer carcass 88 both are part of the same outer carcass, forming a unitary piece. Assembly flanges 68 and 70 are not essential to the practice of the invention, although they are built as integral parts of the outer carcass. Integrated within a forward end of the cylindrical body 66 is a collection housing 72. Housing 72 is a quadrilateral having an internal collection chamber 74 defined along the bottom by portion 62, a rear end wall 76, a forward end wall 78, and an outer wall 80. The outer wall 80 is provided on the outer circumference with integral anchoring rings 82 for anchoring the outer carcass of the hose 26 to the flange 58. A sensor mounting aperture 84 extends through the rear end wall 76 of the collection housing 72.

The hose 26 is configured having an inner carcass layer 86 for retaining a fluid such as oil flowing through the hose 26. Pursuant to conventional construction of double carcass hose, an outer auxiliary carcass layer 88 surrounds the inner layer 86 and is capable of retaining the fluid leaking through the inner layer 86. Tensile reinforcement members 90 are wound around the inner carcass 86, enclosed within cord layers 92. The reinforcement structure represented by tensile members 90 and cord ply layers 92 provide structural strength to the fluid conveying inner carcass 86. A fluid-tight buffering or collection space 94 is positioned between the inner carcass 86 and the outer carcass 88 and extends the axial length of the hose 26. The space 94 receives and retains fluid leaking through the main inner carcass layer 86.

Pursuant to conventional practice, the flange 58 is inserted in one end of the hose body. The cord plies of 92 fit in spaces between the anchoring rings 64 to fasten the hose body to the flange 58. Similarly a cord ply layer 93 beneath the outer carcass 88 fits in spaces between the anchoring rings 82. Thus attached, the forward end of the hose segment 26 is fixedly retained within the cylindrical body 66 and is mechanically secured thereto. The collection space 94, as shown in FIG. 5 extends forward to the annularly disposed and circumferentially extending collection housing 72. Apertures through the rearward end wall 76 of the collection housing 72 allow fluid from the collection space 94 to migrate into the collection chamber 74. Accordingly, the collection chamber 74 is in fluid communication with the collection space 94 and fluid leaking from inner carcass 86 will be collected within the collection chamber 74 of housing 72.

The sensor 34 is assembled to the forward end wall 78 of the collection housing 72 in the manner shown in FIG. 5. With combined reference to FIGS. 2, 3, and 5, the sensor body 36 inserts through aperture 84 of end wall 78 and projects into the collection chamber 74. Threaded bolt end 42 secures the sensor 34 in a fixed, fluid tight connection to the housing 72. The leads 44 exit from the rearward end of the sensor 34 and may be directed to the oil platform or oil tanker control room. The electro-optic transmitter and receiver 38, 40 are thus positioned within the collection chamber 74 at a location generally proximate the rearward end wall 76.

It will be readily appreciated that the sensor 34 is consequently in position to sense fluid that escapes the inner hose carcass 86 into the collection space 94 and, thence, migrates into the collection chamber 74. As the fluid enters the chamber 74 through wall 76 it will penetrate into the gap 41 separating the transmitter and receiver 38, 40 and interfere with the optical beam transmitted therebetween. The blockage of the beam by the oil will, as described previously, close the circuit and cause a signal to be transmitted to the control unit. The signal indicates a leak has occurred in the hose segment associated with the sensor. The signal preferably will be coded, or the control unit will be wired, to identify the sensor from which the leak signal originated. In this manner, the leak can be quickly located and repairs or emergency procedures immediately effected. The resin cover 46 over the forward end of the sensor 34 is liquid tight and serves to prevent entry of oil from the collection chamber 74 into the interior of the sensor. The electronic circuitry within the sensor is thus insulated from potentially damaging contamination from the surrounding oil.

FIG. 4 illustrates a representative control panel 14 that may be located in the control room of a tanker or oil platform. The panel 14 may be wired with a visual display (for example, a LED) that indicates in general that a leak has occurred. A bank of visual indicators (LED's) 97 may further be provided and wired to indicate the particular sensor that has been activated by a leak. The location of the leak may thus be ascertained. In addition, an audible alarm set 98 may be provided to emit an audible sound when a leak is detected.

The sensor system described above satisfies the need of the industry for a means of detecting leakage in a submarine or floating hose line from a remote location, twenty four hours a day and every day of the year, irrespective of weather conditions or lighting conditions. A twenty-four hour operation of the pumping station is thereby facilitated, reducing tanker loading time and making the pumping operation more cost effective. Moreover, because leaks may be remotely detected electronically and monitored from a control room in the tanker or drilling platform, continuous inspection of the oil lines by divers is eliminated. Elimination of risky diving inspections not only reduces the risk of bodily injury to the divers but also significantly reduces operational costs associated therewith.

Alternative configurations of sensors, as explained previously, may be substituted for the electro-optic sensor described as the preferred embodiment. The electro-optic sensor is preferred because it is relatively simple and resistant to malfunction or breakage. An efficient energy efficient switching circuit may be employed that issues a leak signal when the beam of light is broken. Because the collection housing 72, sensor 34, and the collection chamber 74 are advantageously positioned relative to the collection space 94, there is a high probability that leaking fluid from the inner carcass will be detected and the sensor will issue a leak detection signal as designed. The signal may be conducted to the control unit by hard wire or communicated in a wireless manner if preferred.

## Claims

1. A fluid leak detection system (10) for a hose line (16) or a hose line segment (18) of the type comprising at least an inner carcass (86) and an outer containment carcass (88) separated from the inner carcass (86) by a collection space (94), the system (10) comprising:
(i) at least one fluid detection sensor (34) in communication with the collection space (94) for detecting the presence of a fluid within the collection space (94);
(ii) communication means (44) for transmitting a fluid status information from the fluid detection sensor (34) to a remote control unit (14).

2. A system according to claim 1, wherein the fluid detection sensor (34) is housed within a nipple portion (56) of the hose line (16) or the hose line segment (18), preferably wherein at least two fluid detection sensors (34) are each located within opposite respective nipple end portions (56) of the hose line (16) or the hose line segment (18).

3. A system according to claim 1 or 2, further comprising a collection chamber (74) in fluid communication with the collection space (94), the fluid detection sensor (34) extending at least partially into the collection chamber (74).

4. A system according to at least one of the preceding claims, wherein the fluid detection sensor (34) comprises:
an electro-optical device having spaced apart source and receiver sensor tip members (38, 40) disposed in communication with the collection space (94);
optical signal generator means configured to transmit an optical beam between the sensor tip members (38, 40) in the absence of a fluid therebetween; and
signal transmission means for transmitting a signal responsive to an interruption in the optical beam between the sensor tip members (38, 40).

5. A hose line or a hose line segmenet comprising at least an inner carcass layer (86) for retaining a fluid, an outer auxiliary carcass layer (88) sheathing the inner carcass layer (86) and separated from the inner layer (86) by a collection space (94) for collecting a fluid leaking through the inner layer (86), the hose (16) or hose line segment (18) further comprising:
(i) at least one fluid detection sensor (34) in communication with the collection space (94) for detecting the presence of a fluid within the collection space (94);
(ii) communication means (44) for transmitting information from the fluid detection sensor (34) to a remote control unit (44).

6. A hose line or a hose line segment according to claim 5, wherein the fluid detection sensor (34) is housed within a nipple portion (56) of the hose line (16) or hose line segment(18), preferably wherein at least two fluid detection sensors (34) are each located within respective opposite nipple end portions (56) of the hose line (16) or the hose line segment (18).

7. A hose line or a hose line segment according to claim 6, further comprising a collection chamber (74) disposed within each said nipple end portion (56) of the hose line (16) or hose line segment (18), each fluid detection sensor (34) extending at least partially into a respective collection chamber (74).

8. A method for detecting leaks in a double carcass hose of the hose type having at least an inner carcass (86) and an outer containment carcass (88) separated from the inner carcass (86) by a collection space (94), comprising the steps:
positioning at least one fluid detection means (34) within the hose (16, 18) in communication with the collection space (94), the fluid detection means (34) including means for detecting the presence and absence of fluid in the collection space (94); and
communicating information from the fluid detection means (34) to a remote control unit (14) indicative of the location of the fluid detection means (34) and the fluid status of the collection space (94).

9. A method according to claim 8, further comprising the steps of:
incorporating a collection chamber (74) within the hose (16, 18); and
locating the fluid detection means to at least partially extend into the collection chamber (74).

10. A method according to claim 8 or 9, further comprising the further steps:
providing an electro-optical device having spaced apart source and receiver sensor tip members (38, 40) disposed in fluid communication with the collection space (94);
connecting an optical signal generator means to the sensor tip members (38, 40) and transmitting an optical beam between the sensor tip members (38, 40) in the absence of fluid therebetween; and
transmitting to the control unit (14) a signal responsive to an interruption in the optical beam between the sensor tip members (38, 40).

## Amended claims

### Amended claims in accordance with Rule 86(2) EPC.

**1.** A leak detection system (10) for an off-shore oil installation **characterized by**:
a) a surface based control platform;
b) a submarine pumping station;
c) a fluid transmission line comprising at least one fluid transmission hose segment (18) extending from the control platform to the submarine pumping station (32), the hose segment (18) comprising at least an inner carcass layer for retaining a fluid, an outer auxiliary carcass layer (88) sheathing the inner carcass layer and separated from the inner layer by a collection space (94) for collecting fluid leaking through the inner layer;
d) at least one fluid detection sensor (34) in communication with the collection space (94) for detecting the presence of fluid within the collection space (94); and
e) communication means (44) for transmitting leak detection and location information from the fluid detection sensor (34) to a remote surface platform-based control unit (44).

**2.** The leak detection system (10) according to claim 1, wherein the fluid transmission line comprises a plurality of hose segments (18) connected end to end and a plurality of fluid detection sensors (34) located along the fluid transmission line, each sensor in communication with the collection space (94) of a respective hose segment (18) and wherein the remote control unit (44) is capable of distinguishing the location of each sensor to determine by sensor identification the hose segment location of any leak.

**3.** The leak detection system (10) according to claim 1, wherein the communication means (44) comprises at least one electrical signal conducting line extending from the fluid detection sensors (34) to the remote surface platform based control unit (44).

**4.** The leak detection system (10) according to claim 1, wherein the remote surface platform comprises a fluid receiving transport ship.

**5.** The leak detection system (10) according to claim 1, wherein the fluid detection sensor (34) is powered remotely from a remote surface power source by means of a power transmission line extending from the power source to the sensor.

**6.** A method for detecting leaks in a fluid transmission line between a surface based control platform (12) and a submarine pumping station (32), the fluid transmission line being of a type comprising at least one double carcass hose segment having at least an inner carcass (86) and an outer containment carcass (88) separated from the inner carcass (86) by a collection space (94), the method **characterized by** the steps:
positioning at least one fluid detection means within the hose segment (18) in communication with the fluid collection space (94), the fluid detection means including means for detecting the presence and absence of fluid in the collection space (94);
extending a communication line between the control platform and the fluid detection means within the hose segment (18);
monitoring the status of the fluid collection space (94) by means of the fluid detection means; and
communicating information from the fluid detection means to a remote surface platform based control unit (44) indicative of the location of the fluid detection means and the fluid status of the collection space (94) by means of the communication line.

**7.** The method for detecting leaks according to claim 6, comprising the further step of powering the fluid detection means remotely from a remote surface power source by means of a power transmission line extending from the power source to the fluid detection means.

**8.** The method for detecting leaks according to claim 6, further comprising the steps:
constructing the fluid transmission line to comprise a plurality of hose segments (18) connected end to end and a plurality of fluid detection sensors (34) located along the fluid transmission line, each sensor in communication with the collection space (94) of a respective hose segment (18) and
monitoring by means of the remote control unit (44) each sensor to determine by sensor identification the hose segment location of any leak.

**9.** The method for detecting leaks according to claim 8, further comprising the step of extending at least one electrical signal conducting line from the plurality of fluid detection means to the remote surface platform based control unit (44).

**10.** The method for detecting leaks according to claim 9, further comprising the step of powering the plurality of fluid detection means remotely from a remote surface power source by means of at least one power transmission line extending from the power source to plurality of fluid detection means.
